# EUROPEAN PATENT APPLICATION

(11) **EP 3 575 116 A1**
(43) Date of publication of application: **04.12.2019**
(21) Application number: 18764175.8
(22) Date of filing: 01.03.2018
(51) Int. Cl.: B60K 6/365, B60K 6/387, B60K 6/40, B60K 6/48, B60K 6/54, F16H 3/72

(54) **HYBRID VEHICLE TRANSMISSION**

(30) Priority: 09.03.2017 JP 2017044729
(71) Applicant: Exedy Corporation, Neyagawa-shi, Osaka 572-8570 (JP)
(72) Inventor: MURATA, Kousuke, Neyagawa-shi Osaka 572-8570 (JP)
(74) Representative: KASTEL Patentanwälte PartG mbB
(86) International application number: PCT/JP2018/007706
(87) International publication number: WO 2018/163948

(57) **Abstract**

A hybrid vehicle transmission (100) includes an input shaft (1), an output shaft (2), a planetary gear train (3), a first brake (41), a second brake (42), a third brake (43), a first clutch (51) and a second clutch (52). The planetary gear train (3) includes a sun gear (31), a planetary gear (32), a carrier (33) and a ring gear (34). The first brake (41) brakes rotation of the sun gear (31). The second brake (42) brakes rotation of the carrier (33). The third brake (43) brakes rotation of the ring gear (34). The first clutch (51) couples the sun gear (31) and the carrier (33). The second clutch (52) selectively couples the electric motor (M) to one of the ring gear (34) and the output shaft (2).

## Description

### TECHNICAL FIELD

The present invention relates to a hybrid vehicle transmission.

### BACKGROUND ART

PTL 1 proposes a transmission for a hybrid vehicle including an engine and an electric motor as drive sources. In this transmission, a torque of the engine and that of the electric motor are outputted through a Ravigneaux planetary gear train.

### CITATION LIST

### PATENT LITERATURE

PTL 1: Publication of Japan Patent No. 5942228

### SUMMARY OF THE INVENTION

### Technical Problems

Such a hybrid vehicle transmission as described above is complicated, and hence, there is a demand for a hybrid vehicle transmission simplified as much as possible.

It is an object of the present invention to provide a hybrid vehicle transmission simplified as much as possible.

### Solution to Problems

A hybrid vehicle transmission according to an aspect of the present invention is configured to output rotation of each of an engine and an electric motor after change in speed of the rotation. The hybrid vehicle transmission includes an input shaft, an output shaft, a planetary gear train, a first brake, a second brake, a third brake, a first clutch and a second clutch. The input shaft is a component to which a torque is inputted from the engine. The output shaft outputs either the torque from the engine or a torque from the electric motor. The planetary gear train includes a sun gear, a planetary gear, a carrier and a ring gear. The first brake is configured to brake rotation of the sun gear. The second brake is configured to brake rotation of the carrier. The third brake is configured to brake rotation of the ring gear. The first clutch is configured to couple two of the sun gear, the carrier and the ring gear. The second clutch is configured to selectively couple the electric motor to one of the ring gear and the output shaft.

According to this configuration, the planetary gear train herein used is of a normal type including the sun gear, the planetary gear, the carrier and the ring gear. Therefore, the present hybrid vehicle transmission can be simplified as much as possible.

Preferably, the input shaft is rotated unitarily with the sun gear.

Preferably, the first brake is configured to brake rotation of the input shaft.

Preferably, the output shaft is rotated unitarily with the carrier.

Preferably, at least one of the first brake, the second brake, the third brake and the first clutch includes one or more friction plates.

Preferably, the first brake, the second brake, the third brake and the first clutch are of a hydraulic type.

Preferably, the second clutch is a dog clutch. Advantageous Effects of Invention

According to the present invention, it is possible to provide a hybrid vehicle transmission simplified as much as possible.

### BRIEF DESCRIPTION OF THE DRAWINGS

FIG. 1 is a schematic diagram of a configuration of a hybrid vehicle transmission according to the present exemplary embodiment.
FIG. 2 is a table showing which one or more of brakes and clutches are turned to on states in respective traveling patterns.
FIG. 3A is a collinear diagram in traveling pattern 1.
FIG. 3B is a diagram showing torque transmission in the traveling pattern 1.
FIG. 4A is a collinear diagram in traveling pattern 2.
FIG. 4B is a diagram showing torque transmission in the traveling pattern 2.
FIG. 5A is a collinear diagram in traveling pattern 3.
FIG. 5B is a diagram showing torque transmission in the traveling pattern 3.
FIG. 6A is a collinear diagram in traveling pattern 4.
FIG. 6B is a diagram showing torque transmission in the traveling pattern 4.
FIG. 7A is a collinear diagram in traveling pattern 5.
FIG. 7B is a diagram showing torque transmission in the traveling pattern 5.
FIG. 8A is a collinear diagram in traveling pattern 6.
FIG. 8B is a diagram showing torque transmission in the traveling pattern 6.
FIG. 9A is a collinear diagram in traveling pattern 7.
FIG. 9B is a diagram showing torque transmission in the traveling pattern 7.
FIG. 10A is a collinear diagram in traveling pattern 8.
FIG. 10B is a diagram showing torque transmission in the traveling pattern 8.
FIG. 11A is a collinear diagram in traveling pattern 9.
FIG. 11B is a diagram showing torque transmission in the traveling pattern 9.
FIG. 12A is a collinear diagram in traveling pattern 10.
FIG. 12B is a diagram showing torque transmission in the traveling pattern 10.

### DESCRIPTION OF EMBODIMENTS

An exemplary embodiment of a hybrid vehicle transmission according to the present invention will be hereinafter explained with reference to drawings.

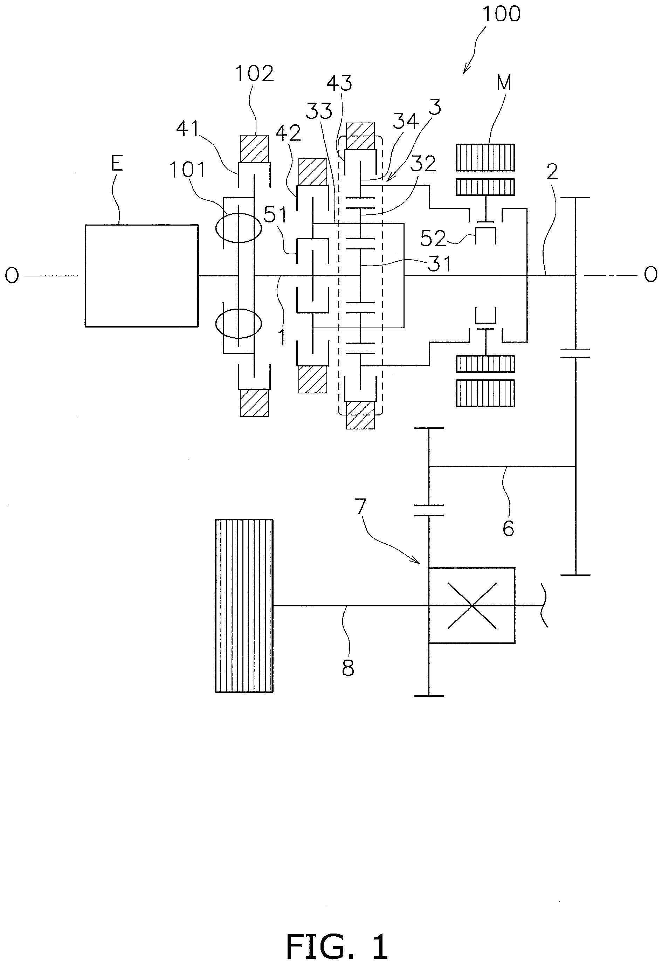

As shown in FIG. 1, the hybrid vehicle transmission is configured to output rotation of each of an engine E and an electric motor M after change in speed of the rotation. This hybrid vehicle transmission 100 includes an input shaft 1, an output shaft 2, a planetary gear train 3, a first brake 41, a second brake 42, a third brake 43, a first clutch 51 and a second clutch 52.

The input shaft 1 is a component to which a torque is inputted from the engine E. The input shaft 1 is connected to the engine E through a damper device 101. The input shaft 1 is rotatable about a rotational axis O.

The output shaft 2 is a component from which the torque from either the engine E or the electric motor M is outputted. The output shaft 2 extends in parallel to the input shaft 1. The output shaft 2 is rotatable about the rotational axis O. In other words, the output shaft 2 has the same rotational axis as the input shaft 1. The output shaft 2 outputs the torque to a driveshaft 8 through a countershaft 6 and a differential gear 7.

The planetary gear train 3 includes a sun gear 31, a plurality of planetary gears 32, a carrier 33 and a ring gear 34. The sun gear 31 is attached to the input shaft 1, and is rotated unitarily with the input shaft 1.

The respective planetary gears 32 are disposed radially outside the sun gear 31. The respective planetary gears 32 are meshed with the sun gear 31. The respective planetary gears 32 are disposed at intervals in a circumferential direction. The respective planetary gears 32 are rotated while being revolved around the sun gear 31.

The carrier 33 supports the respective planetary gears 32 so as to make the respective planetary gears 32 rotatable. The carrier 33 is disposed to be rotatable about the rotational axis O. The carrier 33 is attached to the output shaft 2, and is rotatable unitarily therewith.

The ring gear 34 is disposed radially outside the respective planetary gears 32. The ring gear 34 is meshed with the respective planetary gears 32. The ring gear 34 is disposed to be rotatable about the rotational axis O.

The first to third brakes 41 to 43 are fixed to a casing 102. Because of this, the first to third brakes 41 to 43 are not rotated.

The first brake 41 is configured to brake rotation of the sun gear 31. Specifically, the first brake 41 brakes rotation of the sun gear 31 by braking rotation of the input shaft 1 rotated unitarily with the sun gear 31. The first brake 41 is of a hydraulic type, for instance, and can be composed of one or more friction plates.

When in an on state, the first brake 41 brakes rotation of the sun gear 31. In other words, when in the on state, the first brake 41 couples the sun gear 31 and the casing 102. Therefore, when the first brake 41 is in the on state, the sun gear 31 is non-rotatable.

On the other hand, when in an off state, the first brake 41 does not brake rotation of the sun gear 31. In other words, when in the off state, the first brake 41 does not couple the sun gear 31 and the casing 102. Therefore, when the first brake 41 is in the off state, the sun gear 31 is rotatable.

The second brake 42 is configured to brake rotation of the carrier 33. The second brake 42 is of a hydraulic type, for instance, and can be composed of one or more friction plates.

When in the on state, the second brake 42 brakes rotation of the carrier 33. In other words, when in the on state, the second brake 42 couples the carrier 33 and the casing 102. Therefore, when the second brake 42 is in the on state, the carrier 33 is non-rotatable.

On the other hand, when in the off state, the second brake 42 does not brake rotation of the carrier 33. In other words, when in the off state, the second brake 42 does not couple the carrier 33 and the casing 102. Therefore, when the second brake 42 is in the off state, the carrier 33 is rotatable.

The third brake 43 is configured to brake rotation of the ring gear 34. The third brake 43 is of a hydraulic type, for instance, and can be composed of one or more friction plates.

When in the on state, the third brake 43 brakes rotation of the ring gear 34. In other words, when in the on state, the third brake 43 couples the ring gear 34 and the casing 102. Therefore, when the third brake 43 is in the on state, the ring gear 34 is non-rotatable.

On the other hand, when in the off state, the third brake 43 does not brake rotation of the ring gear 34. In other words, when in the off state, the third brake 43 does not couple the ring gear 34 and the casing 102. Therefore, when the third brake 43 is in the off state, the ring gear 34 is rotatable.

The first clutch 51 is configured to couple the sun gear 31 and the carrier 33. Detailedly, the first clutch 51 couples the sun gear 31 and the carrier 33, while the both can be decoupled. It should be noted that specifically, the first clutch 51 couples the input shaft 1 and the carrier 33. The input shaft 1 is rotated unitarily with the sun gear 31. Hence, when the input shaft 1 and the carrier 33 are coupled by the first clutch 51, the sun gear 31 and the carrier 33 are unitarily rotated. The first clutch 51 is a clutch mechanism of a hydraulic type, for instance, and can be composed of one or more friction plates.

When in the on state, the first clutch 51 couples the sun gear 31 and the carrier 33. Therefore, when the first clutch 51 is in the on state, the sun gear 31 and the carrier 33 are unitarily rotated.

On the other hand, when in the off state, the first clutch 51 decouples the sun gear 31 and the carrier 33. Therefore, when the first clutch 51 is in the off state, the sun gear 31 and the carrier 33 are rotatable relatively to each other.

The second clutch 52 is configured to selectively couple the electric motor M to either the ring gear 34 or the output shaft 2. In other words, when in the on state, the second clutch 52 couples the electric motor M and the ring gear 34 or couples the electric motor M and the output shaft 2. It should be noted that when the second clutch 52 is in the off state, the electric motor M is rotatable relatively to the ring gear 34 and the output shaft 2. The second clutch 52 is, for instance, a dog clutch.

### [Action of Hybrid Vehicle Transmission]

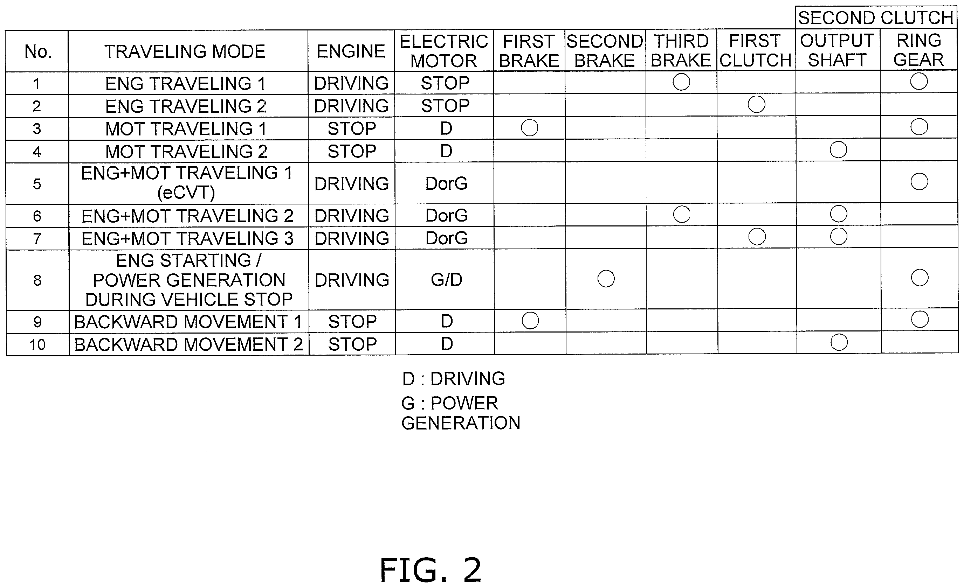

An action of the hybrid vehicle transmission 100 configured as described above will be explained. FIG. 2 is a table showing which one or more of the respective clutches or brakes are turned to the on states in respective traveling patterns. It should be noted that in FIG. 2, legend "O" indicates each of the clutches or brakes turned to the on state.

As shown in FIG. 2, the third brake 43 is turned to the on state in traveling pattern No. 1. Additionally, the second clutch 52 couples the electric motor M and the ring gear 34. It should be noted that the first brake 41, the second brake 42 and the first clutch 51 are in the off states. In this traveling pattern, the third brake 43 is turned to the on state, whereby the ring gear 34 is made non-rotatable. It should be noted that the engine E is being driven, while the electric motor M is being stopped.

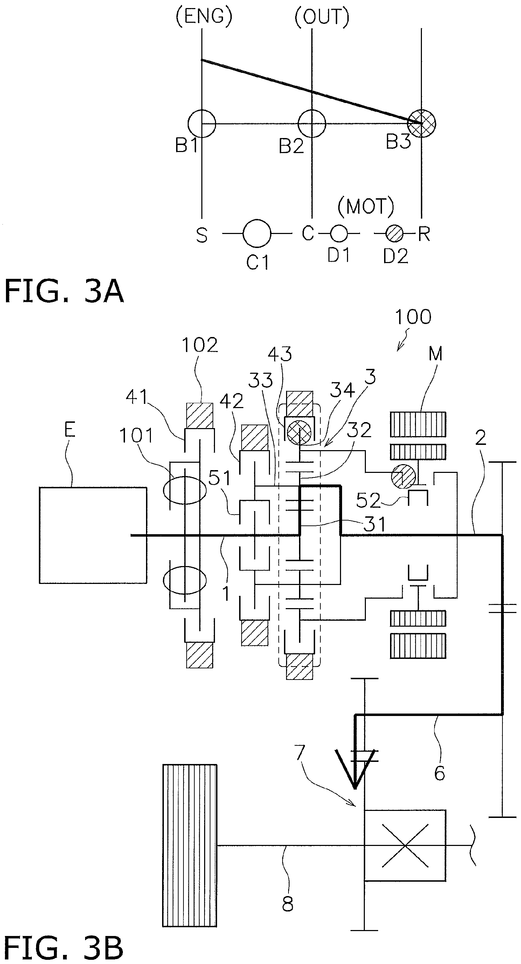

FIG. 3A is a collinear diagram showing this condition. It should be noted that in the respective collinear diagrams including FIG. 3A, "S" indicates the sun gear 31; "C" indicates the carrier 33; "R" indicates the ring gear 34; "B1" indicates the first brake 41; "B2" indicates the second brake 42; "B3" indicates the third brake 43; "C1" indicates the first clutch 51; and "D1" and "D2" indicate the second clutch 52. Additionally, in the respective collinear diagrams, a circle filled with hatched lines indicates that a member, to which this circle is assigned, is in the on state, whereas a circle unfilled with hatched lines indicates that a member, to which this circle is assigned, is in the off state. Moreover, when a circle of D1 is filled with hatched lines, this indicates that the second clutch 52 couples the electric motor M and the output shaft 2. On the other hand, when a circle of D2 is filled with hatched lines, this indicates that the second clutch 52 couples the electric motor M and the ring gear 34.

In this condition, the hybrid vehicle transmission 100 transmits a torque through a path indicated with a bold line in FIG. 3B. Specifically, the input shaft 1 and the sun gear 31 are unitarily rotated by the torque transmitted thereto from the engine E. By the rotation of the sun gear 31, the respective planetary gears 32 are rotated while being revolved. As a result, the carrier 33 is rotated together with the output shaft 2.

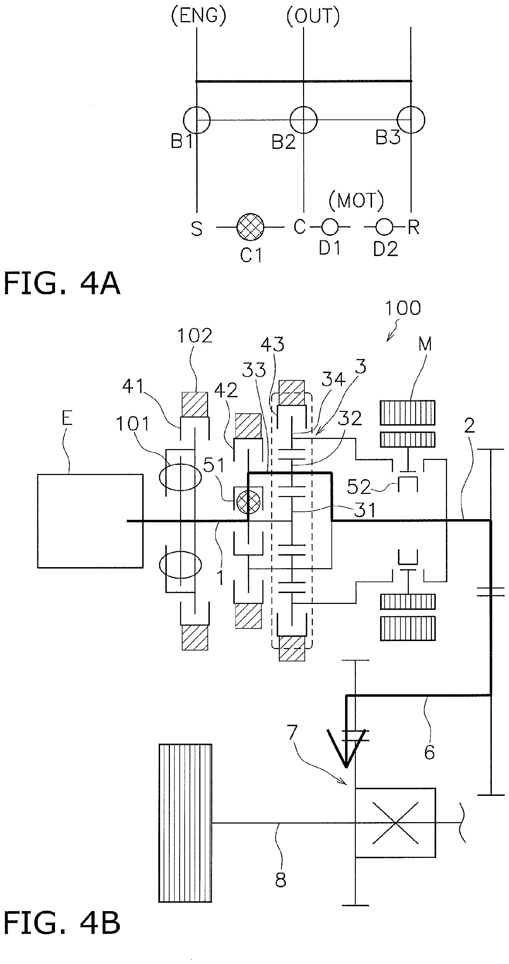

As shown in FIG. 2, the first clutch 51 is turned to the on state in traveling pattern No. 2. It should be noted that the first brake 41, the second brake 42, the third brake 43 and the second clutch 52 are in the off states. In this traveling pattern, the first clutch 51 is turned to the on state. Hence, the input shaft 1 and the carrier 33 are coupled, and are unitarily rotated. It should be noted that the engine E is being driven, while the electric motor M is being stopped. FIG. 4A is a collinear diagram showing this condition.

In this condition, the hybrid vehicle transmission 100 transmits a torque through a path indicated with a bold line in FIG. 4B. Specifically, the input shaft 1, the carrier 33 and the output shaft 2 are unitarily rotated by the torque transmitted thereto from the engine E.

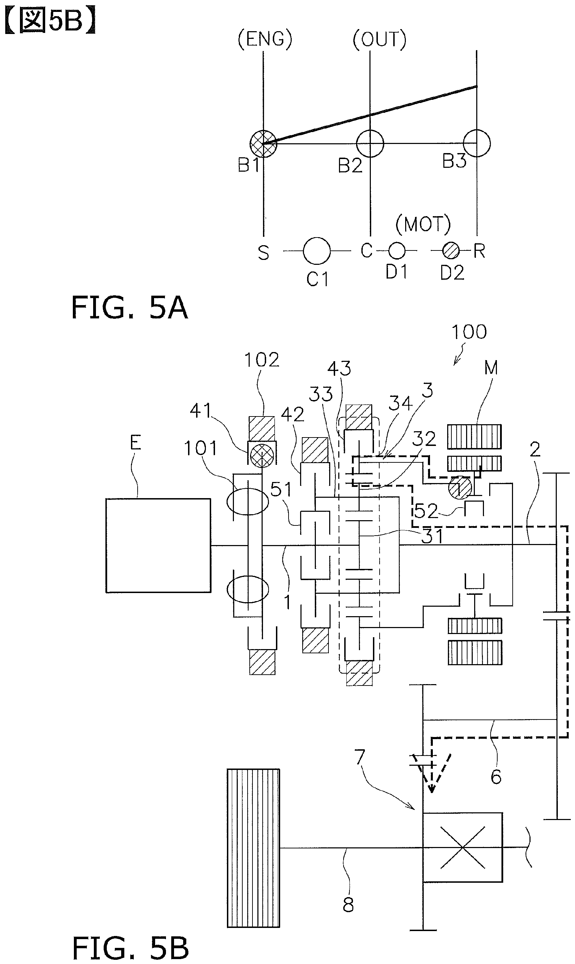

As shown in FIG. 2, the first brake 41 is turned to the on state in traveling pattern No. 3. Additionally, the second clutch 52 couples the electric motor M and the ring gear 34. It should be noted that the second brake 42, the third brake 43 and the first clutch 51 are in the off states. In this traveling pattern, the first brake 41 is turned to the on state, whereby the sun gear 31 is made non-rotatable. It should be noted that the engine E is being stopped, while the electric motor M is being driven. FIG. 5A is a collinear diagram showing this condition.

In this condition, the hybrid vehicle transmission 100 transmits a torque through a path indicated with a bold broken line in FIG. 5B. Specifically, the ring gear 34 is rotated by the torque transmitted thereto from the electric motor M. By the rotation of the ring gear 34, the respective planetary gears 32 are rotated while being revolved. As a result, the carrier 33 is rotated together with the output shaft 2.

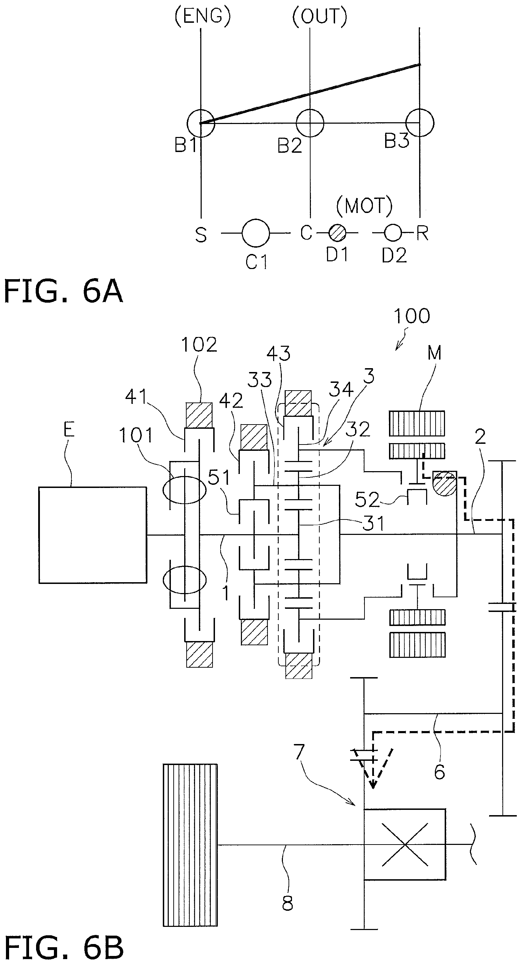

As shown in FIG. 2, the second clutch 52 couples the electric motor M and the output shaft 2 in traveling pattern No. 4. It should be noted that the first brake 41, the second brake 42, the third brake 43 and the first clutch 51 are in the off states. It should be noted that the engine E is being stopped, while the electric motor M is being driven. FIG. 6A is a collinear diagram showing this condition.

In this condition, the hybrid vehicle transmission 100 transmits a torque through a path indicated with a bold broken line in FIG. 6B. Specifically, the output shaft 2 is rotated by the torque transmitted thereto from the electric motor M.

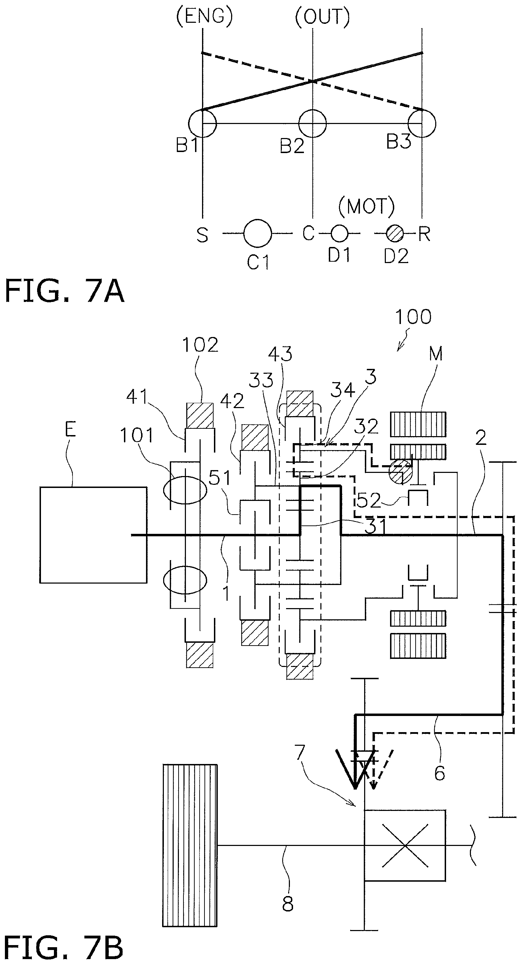

As shown in FIG. 2, the second clutch 52 couples the electric motor M and the ring gear 34 in traveling pattern No. 5. It should be noted that the first brake 41, the second brake 42, the third brake 43 and the first clutch 51 are in the off states. It should be noted that the engine E is being driven, while the electric motor M is being driven. The electric motor M may be in a power generating state. FIG. 7A is a collinear diagram showing this condition.

In this condition, the hybrid vehicle transmission 100 transmits a torque through a path indicated with a bold line in FIG. 7B. Specifically, the input shaft 1 and the sun gear 31 are unitarily rotated by the torque transmitted thereto from the engine E. On the other hand, the ring gear 34 is rotated by the torque transmitted thereto from the electric motor M. By the rotation of the sun gear 31 and that of the ring gear 34, the respective planetary gears 32 are rotated while being revolved. As a result, the carrier 33 is rotated together with the output shaft 2. It should be noted that the electric motor M is enabled to generate electric power by regulating the torque of the electric motor M.

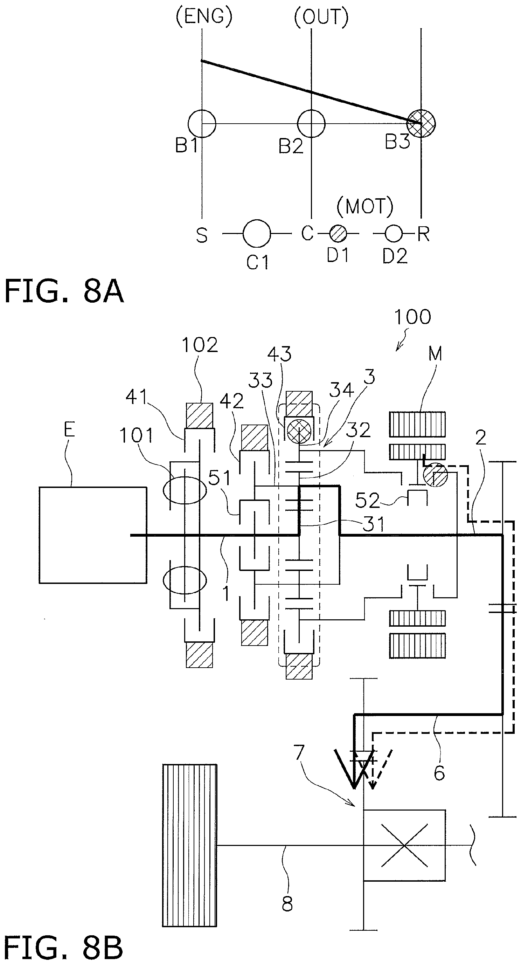

As shown in FIG. 2, the third brake 43 is turned to the on state in traveling pattern No. 6. Additionally, the second clutch 52 couples the electric motor M and the output shaft 2. It should be noted that the first brake 41, the second brake 42 and the first clutch 51 are in the off states. The third brake 43 is in the on state, whereby the ring gear 34 is non-rotatable. It should be noted that the engine E is being driven, while the electric motor M is being driven. The electric motor M may be in the power generating state. FIG. 8A is a collinear diagram showing this condition.

In this condition, the hybrid vehicle transmission 100 transmits a torque through a path indicated with a bold line in FIG. 8B. Specifically, the input shaft 1 and the sun gear 31 are unitarily rotated by the torque transmitted thereto from the engine E. By the rotation of the sun gear 31, the respective planetary gears 32 are rotated while being revolved. As a result, the carrier 33 and the output shaft 2 are rotated. Additionally, the output shaft 2 is also rotated by the torque transmitted thereto from the electric motor M.

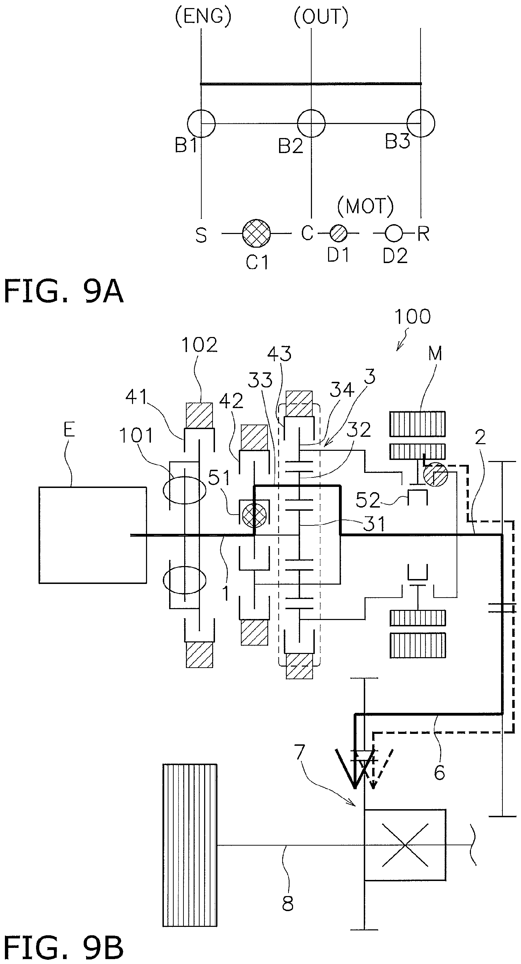

As shown in FIG. 2, the first clutch 51 is turned to the on state in traveling pattern No. 7. Additionally, the second clutch 52 couples the electric motor M and the output shaft 2. It should be noted that the first brake 41, the second brake 42 and the third brake 43 are in the off states. The first clutch 51 is in the on state, whereby the input shaft 1 and the carrier 33 are unitarily rotated. It should be noted that the engine E is being driven, while the electric motor M is being driven. The electric motor M may be in the power generating state. FIG. 9A is a collinear diagram showing this condition.

In this condition, the hybrid vehicle transmission 100 transmits a torque through a path indicated with a bold line in FIG. 9B. Specifically, the input shaft 1, the carrier 33 and the output shaft 2 are unitarily rotated by the torque transmitted thereto from the engine E. Additionally, the output shaft 2 is also rotated by the torque transmitted thereto from the electric motor M.

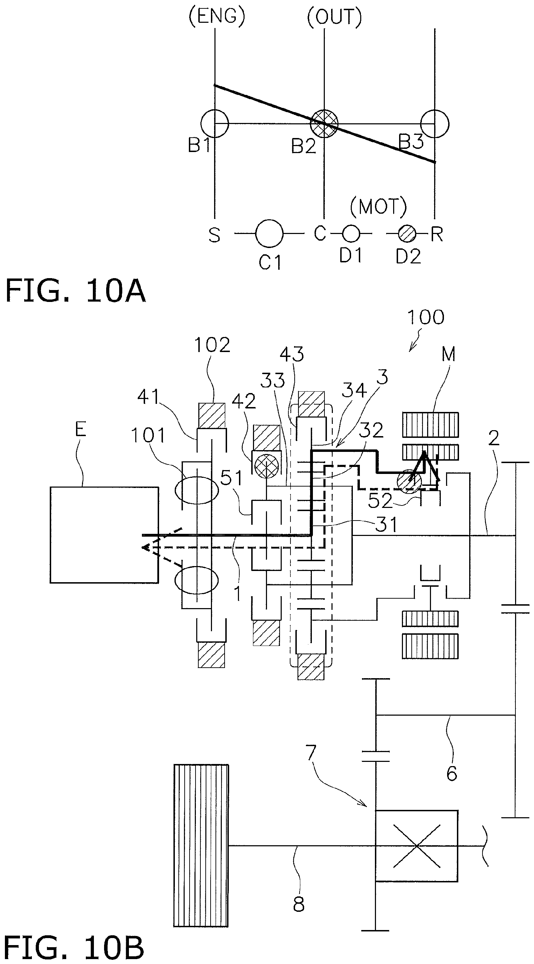

In traveling pattern No. 8, the vehicle is not caused to travel, but the engine E is caused to start or the electric motor M is caused to generate electric power. As shown in FIG. 2, the second brake 42 is turned to the on state in this traveling pattern. Additionally, the second clutch 52 couples the electric motor M and the ring gear 34. It should be noted that the first brake 41, the third brake 43 and the first clutch 51 are in the off states. The second brake 42 is in the on state, whereby the carrier 33 is non-rotatable. FIG. 10A is a collinear diagram showing this condition.

In this condition, the hybrid vehicle transmission 100 transmits a torque through a path indicated with a bold line in FIG. 10B. Specifically, in starting of the engine E, the ring gear 34 is rotated by the torque transmitted thereto from the electric motor M. The respective planetary gears 32 are rotated by the rotation of the ring gear 34, whereby the sun gear 31 is rotated. The input shaft 1 is rotated by the rotation of the sun gear 31, whereby the engine E is started. When the engine E is started, a torque is transmitted in a reverse path, and the electric motor M generates electric power.

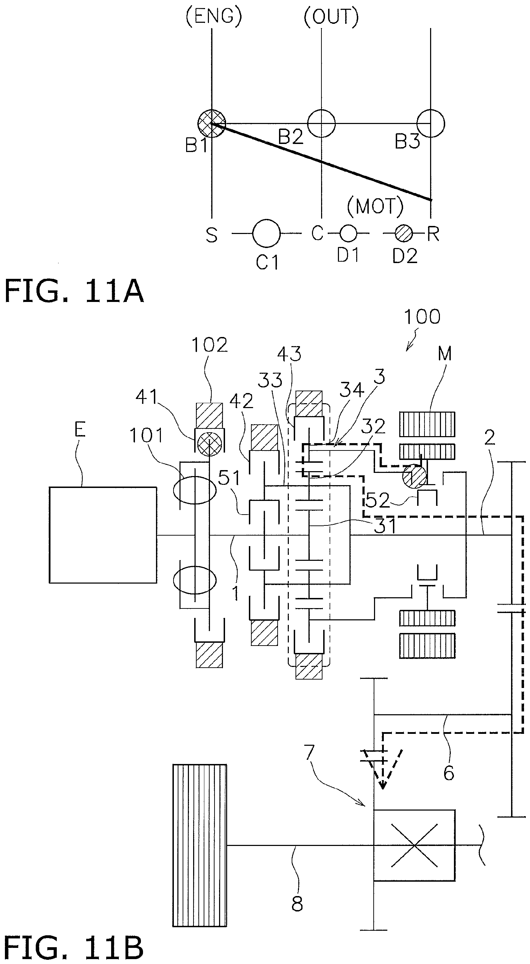

In traveling pattern No. 9, the vehicle is moved backward. As shown in FIG. 2, the first brake 41 is turned to the on state in traveling pattern No. 9. Additionally, the second clutch 52 couples the electric motor M and the ring gear 34. It should be noted that the second brake 42, the third brake 43 and the first clutch 51 are in the off states. In this traveling pattern, the first brake 41 is turned to the on state, whereby the input shaft 1 and the sun gear 31 are made non-rotatable. It should be noted that the engine E is being stopped, while the electric motor M is being driven. In other words, an action herein performed is basically the same as that in the traveling pattern No. 3. In the traveling pattern No. 9, the rotational direction of the electric motor M is opposite to that in the traveling pattern No. 3. FIG. 11A is a collinear diagram showing this condition.

In this condition, the hybrid vehicle transmission 100 transmits a torque through a path indicated with a bold line in FIG. 11B. Specifically, the ring gear 34 is rotated by the torque transmitted thereto from the electric motor M. By the rotation of the ring gear 34, the respective planetary gears 32 are rotated while being revolved. As a result, the carrier 33 is rotated together with the output shaft 2.

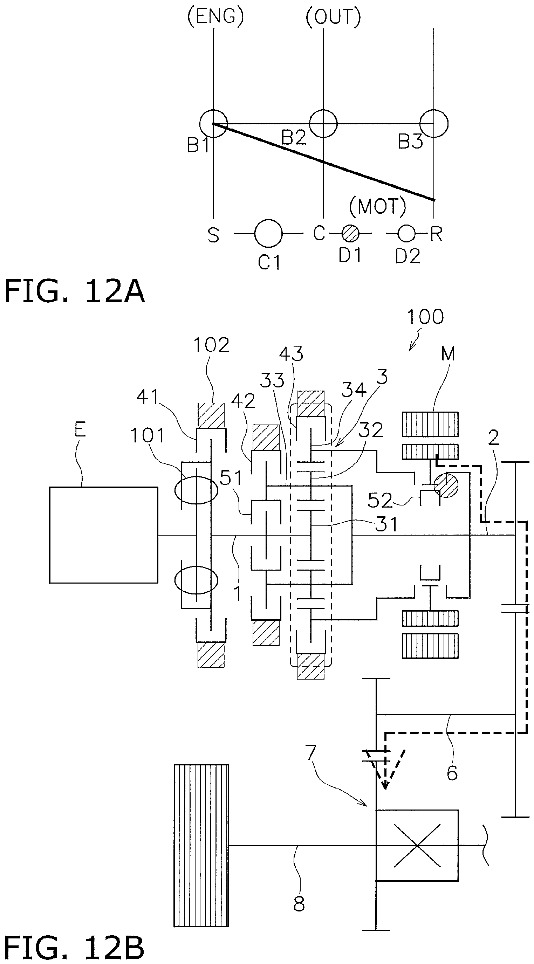

In traveling pattern No. 10, the vehicle is moved backward. As shown in FIG. 2, the second clutch 52 couples the electric motor M and the output shaft 2 in traveling pattern No. 10. It should be noted that the first brake 41, the second brake 42, the third brake 43 and the first clutch 51 are in the off states. It should be noted that the engine E is being stopped, while the electric motor M is being driven. In other words, an action herein performed is basically the same as that in the traveling pattern No. 4. In the traveling pattern No. 10, the rotational direction of the electric motor M is opposite to that in the traveling pattern No. 4. FIG. 12 is a collinear diagram showing this condition.

In this condition, the hybrid vehicle transmission 100 transmits a torque through a path indicated with a bold line in FIG. 12B. Specifically, the output shaft 2 is rotated by the torque transmitted thereto from the electric motor M.

### [Modifications]

One exemplary embodiment of the present invention has been explained above. However, the present invention is not limited to the aforementioned exemplary embodiment, and a variety of changes can be made without departing from the gist of the present invention.

For example, in the aforementioned exemplary embodiment, the first clutch 51 is configured to couple the sun gear 31 and the carrier 33. However, the configuration of the first clutch 51 is not limited to this. For example, the first clutch 51 may be configured to couple the carrier 33 and the ring gear 34.

### REFERENCE SIGNS LIST

- 1: Input shaft
- 2: Output shaft
- 3: Planetary gear train
- 31: Sun gear
- 32: Planetary gear
- 33: Carrier
- 34: Ring gear
- 41: First brake
- 42: Second brake
- 43: Third brake
- 51: First clutch
- 52: Second clutch
- 100: Hybrid vehicle transmission
- E: Engine
- M: Electric motor

## Claims

1. A hybrid vehicle transmission outputting rotation of each of an engine and an electric motor after change in speed of the rotation, the hybrid vehicle transmission comprising:
an input shaft to which a torque is inputted from the engine;
an output shaft outputting either the torque from the engine or a torque from the electric motor;
a planetary gear train including a sun gear, a planetary gear, a carrier and a ring gear;
a first brake configured to brake rotation of the sun gear;
a second brake configured to brake rotation of the carrier;
a third brake configured to brake rotation of the ring gear;
a first clutch configured to couple two of the sun gear, the carrier and the ring gear; and
a second clutch configured to selectively couple the electric motor to one of the ring gear and the output shaft.

2. The hybrid vehicle transmission according to claim 1, wherein the input shaft is rotated unitarily with the sun gear.

3. The hybrid vehicle transmission according to claim 2, wherein the first brake is configured to brake rotation of the input shaft.

4. The hybrid vehicle transmission according to any of claims 1 to 3, wherein the output shaft is rotated unitarily with the carrier.

5. The hybrid vehicle transmission according to any of claims 1 to 4, wherein at least one of the first brake, the second brake, the third brake and the first clutch includes one or more friction plates.

6. The hybrid vehicle transmission according to any of claims 1 to 5, wherein the first brake, the second brake, the third brake and the first clutch are of a hydraulic type.

7. The hybrid vehicle transmission according to any of claims 1 to 6, wherein the second clutch is a dog clutch.
